(19) **Europäisches Patentamt / European Patent Office / Office européen des brevets**

(11) **EP 3 208 242 B1**

(12) # EUROPEAN PATENT SPECIFICATION

(45) Date of publication and mention
of the grant of the patent:
**06.05.2020 Bulletin 2020/19**

(51) Int Cl.:
**C02F 1/34** *(2006.01)*    *C02F 1/36* *(2006.01)*

(21) Application number: **16472001.3**

(22) Date of filing: **18.02.2016**

(54) **ULTRASOUND METHOD FOR DISINFECTING WATER**

VERFAHREN ZUR DESINFEKTION VON WASSER DURCH ULTRASCHALL

PROCÉDÉ DE DÉSINFECTION D'EAU PAR ULTRASON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2017 Bulletin 2017/34**

(73) Proprietors:
• **Treelium SA**
 **6855 Stabio (CH)**
• **M+U Technologies Ltd.**
 **1680 Sofia (BG)**

(72) Inventors:
• **Katzarov, Jivko**
 **1680 Sofia (BG)**
• **Riccardino, Paolo Lorenzo**
 **10023 Chieri (TO) (IT)**

(74) Representative: **Biazzi, Riccardo et al**
 **M. ZARDI & CO. S.A.**
 **Via Pioda, 6**
 **6900 Lugano (CH)**

(56) References cited:
**WO-A2-2012/003815    FR-A1- 2 873 041
JP-A- 2015 123 398    US-A1- 2005 058 579
US-A1- 2010 072 143**

## Description

### Field of application

The invention relates to a method for disinfecting water and related device.

### Prior Art

Water flowing within the distribution networks (also termed "piped water") may contain biological contaminants, such as bacteria,which are harmful for human health and represent sources of several diseases. The need for water disinfection is felt, in particular, for uses involving many persons in direct contact with water, such as swimming pools, spa, medicinal baths, wellness centers and the like.

In such cases, a common technique to avoid proliferation of bacteria is the addition of a chemical agent, typically containing chlorine (chlorination). Chlorination has however several drawbacks. The amount of chlorine added to the water must be controlled because a low amount would be ineffective while an excess of chlorine may be harmful; in any case chlorine is a dangerous and potentially lethal substance and the presence of chlorine in the water is not always well tolerated.

Alternative methods for water disinfection which do not add chemicals to the water employ for example the UV radiation, which however consumes energy, requires specific and expensive equipment, and is not always efficient.

For the above reasons, the need for alternative methods for water disinfection, particularly in the field of water treatment for spa, swimming pools and the like, is strongly felt.

US 2005/058579 discloses a transducer for converting flow energy of a liquid to acoustic or ultrasonic energy, wherein a process liquid flows through oscillatory members.

WO 2012/003815 discloses a device for killing microorganisms in liquids comprising a cavitation tube. US 2010/0072143 discloses a water treatment system comprising a cavitation chamber.

### Summary of the invention

The invention aims to overcome the aforementioned problems and drawbacks of the prior art.

In particular, the invention aims to provide a method and related device for water disinfection that achieves efficient disinfection with no or minimal use of chemicals, which is better for people, environment and machinery.

This aim is reached with a method according to the attached claims.

The idea forming the basis of the invention is to provide a disinfection method which is based on the induction of ultrasonic waves into a flow of water. The term of ultrasonic waves denotes pressure waves with a frequency of at least 20 kHz or greater. In a preferred embodiment of the invention, said ultrasonic waves have a frequency of 20 to 100 kHz, more preferably 20 to 40 kHz.

Without being bound by theory, the applicant believes that the above ultrasonic waves create small bubbles (microbubbles) in the water flow. Said microbubbles expand and contract following the pressure waves, until they reach a maximum size and collapse. Collapse of a microbubble causes a localized rapid compression and release of heat which is quickly absorbed by the surrounding water. Accordingly, the collapse of a microbubble generates a hot spot in the water flow, wherein a very high temperature is reached, although for infinitesimal time and infinitesimal region. Said hot spot destroys the cell membranes of bacteria and produces free radicals against their proliferation.

A further effect of the above ultrasonic waves is a reduced size of the so-called water clusters, which are meant as hydrogen bonded assemblies of molecules of water. It is believed that said ultrasonic pressure waves break at least some of the hydrogen bonds. The so obtained water is termed "activated water" and tends to form smaller clusters, due to the reduced number of hydrogen bonds.

The applicant has found that said activated water limits the proliferation of bacteria thanks to its capacity of inhibiting the vital osmotic processes of bacteria. The applicant observed that said smaller clusters of water surround the bacteria cell membranes, thus creating a hypotonic osmotic environment all around. Hence, water tends to equalize the osmotic pressure on both sides of the cell membranes thus diluting the solution within the cell. As a consequence, bacteria provided with weak cell membranes (i.e. Gram-negative bacteria) swell until explosion, while bacteria provided with strong cell membranes (i.e. Gram-positive bacteria) swell without exploding, but are no longer able to reproduce with the typical bacterial growth speed.

The applicant has also observed that the breakage of at least some hydrogen bonds is responsible for a reduced viscosity of said activated water.

Said ultrasonic pressure waves are induced by a set of surfaces which are aligned along the direction of the water flow to be disinfected, and each surface partially obstructs the flow passage. Advantageously, adjoining surfaces are arranged to define a tortuous passage for said water flow and said water flow forms vortices.

The method of the invention is carried out within a device comprising a tubular outer shell and an inner set of blades (pressure waves-inducing blades) comprised within a tubular activation chamber and providing the above mentioned surfaces. A front surface of each blade, facing the incoming flow of water, provides the respective impact surface for the flow of water. Preferably, said device is in-line so that it can be easily mounted on a water piping. The device is substantially tubular, i.e. the outer shell is tubular and the activation chamber is a tubular passage. The blades are aligned in an axial direction of the tubular device.

Said blades are responsible for the generation of the ultrasonic pressure waves within the water flow when the device is traversed by said flow of water, while the outer shell can substantially act as a wave guide forcing the ultrasonic waves through an obligated path and, therefore, as a directional amplifier concentrating the ultrasonic waves in a precise spatial direction.

As a consequence, the ultrasonic waves are spatially propagated only along the longitudinal direction of the shell (so-called travelling waves) and oscillate in time along the transversal direction (so-called stationary waves).

The pressure waves induced by the device have a carrier frequency Fc which depends on the frequency of impacts of the water flow hitting the impact surfaces. Said carrier frequency *Fc* can be defined as *Fc = v / p*, wherein *v* is the speed of water and p is a distance (pitch distance) between adjoining impact surfaces, for example between consecutive surfaces, in the flow direction. Said distance is constant.

In some embodiments, there is substantially no clearance (free space) between adjoining blades which provide the impact surfaces, which means that said pitch distance is equal to the thickness of the blades.

The above defined carrier frequency Fc is set to 160 Hz or about 160 Hz. It has been found that a carrier frequency of 160 Hz provides the best effect against bacteria. Said frequency has been found to correspond to the frequency of bacteria bio-resonance. Accordingly, an aspect of the invention is the provision of a suitable set of blades to produce a carrier frequency in the above mentioned preferred range.

An aspect of the invention is to design the pressure waves-inducing blades in such a way that the fundamental frequency $f_0$ of vibration of said blades, or a frequency $f_n$ of a higher mode of vibration, equates said carrier frequency Fc.

The blades are shaped as vibrating rods or bars, and the following table (1) reports the ratio $f_n / f_0$ of transverse modes of vibration, which are known in the literature. The fundamental frequency is the frequency of the first mode.

Table (1)

| Mode | $f_n / f_0$ |
|------|-------------|
| 1 | 1 |
| 2 | 2.76 |
| 3 | 5.40 |
| 4 | 8.93 |
| 5 | 13.34 |
| 6 | 18.64 |

The choice of equating the fundamental frequency $f_0$ or a higher frequency (of a higher mode of vibration) to said carrier **Fc** depends mainly on the size of the device and size of blades. As a general rule, the larger the device, the higher the frequency that shall be equal to **Fc** in order to ensure a proper design of the device.

The blades are located in a tubular passage. The fundamental frequency of the blades is selected taking into account the diameter of said tubular passage.

The experimental table (2) below gives the mode of transverse vibration of a bar-shaped or rod-shaped blade, whose frequency is equated to Fc for designing purpose, according to the inner diameter of the tubular passage. The table (2) gives also the standard diameter NPS.

Table (2)

| Mode | Nominal diameter NPS (in) | Inner diameter (mm) |
|------|---------------------------|---------------------|
| 1 | ≤ ½" (≤ 12.70 mm) | up to 15.8 |
| 2 | ¾" - 1" (19.05 - 25.40 mm) | 15.9 - 26.6 |
| 3 | 1 ¼" - 1 ½" (31.75 - 38.10 mm) | 26.7 - 40.9 |
| 4 | 2" - 2 ½" (50.80 - 63.50 mm) | 41.0 - 62.7 |

(continued)

| Mode | Nominal diameter NPS (in) | Inner diameter (mm) |
|---|---|---|
| 5 | 3" - 3 ½" (76.20 - 88.90) | 62.8 - 95.3 |
| 6 | ≥ 4" (101.60 mm) | > 95.3 |

By combining data from Table (1) and Table (2), and after a choice of a suitable carrier frequency **Fc,** the fundamental frequency of the blades can be determined. The fundamental frequency then influences the design of the blades and their thickness in particular. In a preferred embodiment, the blades are substantially identical. More preferably, the blades are shaped as substantially rectangular bars.

According to the method of the invention, **Fc** = 160 Hz and assuming for example a device having a diameter of 2" (50.80 mm), Table (2) provides that $f_4$ = **Fc** and, consequently, $f_0$ = **Fc**/8.93 = 17.92 Hz. The blades are designed accordingly; a detailed example is given in the description.

The generation of ultrasonic waves is related to the volumetric flowrate of water passing through the device. A device according to the invention has a minimum flowrate $Q_{min}$, also termed activation flowrate, to establish the generation of ultrasonic pressure waves. Said activation flowrate corresponds to a minimum speed (threshold speed) of water $v_{min}$.

The minimum speed $v_{min}$ can be calculated from the fundamental frequency (lower mode of vibration) of the blades, as will be explained below. As a general indication, a water treatment device according to the invention and having a diameter of 2" (50.80 mm), operates preferably with a volumetric flow rate ranging from 10 to 20 m³/h of water. More preferably, the flow rate ranges from 10 to 15 m³/h, in order to avoid too large blades with elevated pressure drops.

Advantageously, the blades are rotated one to another by a pitch angle preferably comprised in the range 10 to 45 degrees. Even more preferably said pitch angle is comprised in the range 27 to 33 degrees, which ensures an optimal compromise between minimal pressure drops and adequate turbulence.

The pitch angle and its sense are preferably constant along the sequence of the blades, so as a spiral path is defined for the flow of water, which ensures an optimal compromise between an adequate flow rate and hydrodynamic effect of the blades on the flow.

A preferred form of said blades is represented by a rectangular or substantially rectangular shape. In a preferred embodiment the blades are substantially rectangular shaped having two straight long sides and two rounded shorts sides. These blades can be regarded as discs cut by two parallel lines.

The thickness of each blade is univocally determined by the following parameters: the longer side of the blade, the material of construction and its intrinsic parameters, namely the radius of gyration, the Young's modulus and the density. With radius of gyration is meant the inertia of the blade with respect to rotations around an axis perpendicular to the blade and passing through the middle thereof; with Young's modulus, also known as elastic modulus, is meant the relationship between stress (force per unit area) and strain (proportional deformation) in a material.

Preferably, the longer side of the blade corresponds to the diameter of the device, which preferably ranges between 3/8" and 4" (9.53 and 101.60 mm).

For example, blades made of AISI Type 304 Stainless Steel and provided with longer sides of around 54 mm, are designed with a thickness of around 10 mm.

The number of blades depends on the pitch angle and the number of rotations the vortices of water make so as to obtain ultrasonic frequencies, and is preferably comprised between 10 and 40, and more preferably between 20 and 30. The length of the chamber corresponds instead to the product between the number of blades and their thickness.

Preferably, the blades are secured to a supporting tube extending along at least part of the length of the chamber. More preferably, said supporting tube passes through a central axis of the blades.

According to some embodiments, the blades are spaced one relative to the other, being arranged on the supporting tube at a predetermined relative distance. Such embodiment may be helpful to reduce the number of blades, and, consequently, the length of the chamber.

In order to accomplish the need of high reliability and long life of the device, said device is preferably realized with stainless steel.

Some preferred embodiments of a device adapted to carry out the method of the invention are as follows.

The number of blades is comprised between 10 and 40.

The device can be mounted in-line on a water piping.

The invention is applicable in the field of water treatment for spa or swimming pools. More in detail, the invention is suitable for limiting or inhibiting the proliferation of bacteria and microorganisms.

The operation of the above described device is as follows. The contact between the water and the blades generate pressure waves which propagate through the device. Thanks to their orientation, the blades also induce a vortex which acts substantially as an aerophone, generating higher frequencies and reaching the ultrasonic band. The device generates pressure waves with a fundamental frequency equal to the carrier frequency Fc, and higher frequencies.

The invention provides water disinfection and inhibits the proliferation of bacteria and microorganism without the need for chemical additives and without requiring an external energy source. In addition, a device suitable to perform the method of the invention is inexpensive and requires very little maintenance. Further advantages will emerge from the following description which is given as a non-limitative example.

Brief description of the figures

Fig. 1 shows a diagrammatic longitudinal section of a water disinfection device.

Fig. 2 is a diagrammatic cross-section of the device of Fig. 1.

Fig. 3 is a detail of Fig. 1.

Fig. 4 shows a blade of the device.

Fig. 5 shows an axonometric view of the device.

Detailed description of preferred embodiments

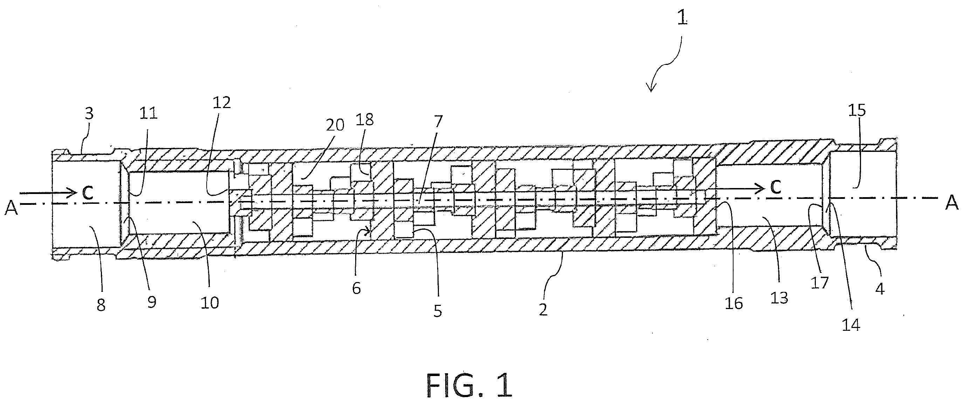

Fig. 1 shows a cross section of a water disinfection device 1 suitable to put in place the method of the present invention with longitudinal axis A-A and comprising a cylindrical shell 2, an inlet fitting 3, an outlet fitting 4 and an inner assembly 5.

Said assembly 5 provides a set of impact surfaces 18 for a water flow C entering the device 1 from the inlet fitting 3, thus defining a tortuous path for said water flow C. Said impact surfaces 18 are evenly distanced by a pitch p.

More in detail, the assembly 5 comprises a plurality of blades 6 which are supported by a common supporting tube 7 passing through a central axis of the blades (parallel to axis A-A). The blades 6 are contained in a tubular passage or channel 20, delimited by said shell 2. The coupling between the blades 6 and the supporting tube 7 is relatively free, allowing vibration of the blades 6 relative to said tube 7.

Each blade 6 has a front face, facing the inlet fitting 3, which provides the respective impact surface 18. In the shown embodiment, the blades 6 are solid bodies with substantially no free space between one another, which means that the above mentioned pitch distance p is equal to the thickness of blades 6 in the axial direction (direction of axis A-A).

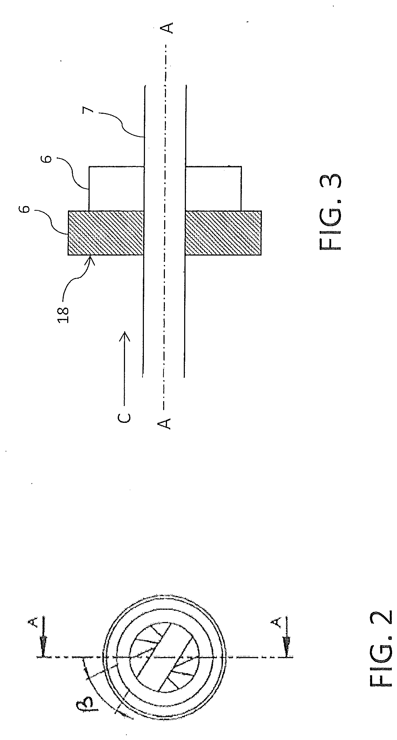

In addition, each blade 6 is rotated by a constant pitch angle $\beta$ relatively to the preceding one in a given sense, so as to provide a tortuous path for the flow of water within the channel 20, as visible in Fig. 2. Preferably, the pitch angle $\beta$ is comprised in the range 10 to 45 degrees. In the example of the Fig. 2, said angle is 33 degrees. This angled arrangement defines a spiral path in the channel 20, said path being delimited by the blades 6 and the inner surface of the cylindrical shell 2.

Preferably, the blades 6 are substantially rectangular plates.

Preferably, the number of blades 6 is comprised between 10 and 40, even more preferably between 20 and 30. In the example of the figure, the number of blades 6 is 23.

The inlet fitting 3 comprises preferably an opening 8 for the entry of water C, a convergent section 9 and a portion 10 having a constant cross section. Said portion 10 has an inlet surface 11 matching the outlet of the convergent section 9 and an outlet surface 12 facing the bladed assembly 5 and through which the water flow C is introduced into the channel 20.

The outlet fitting 4 comprises preferably a portion 13 with a constant cross section, a divergent section 14 and an opening 15 for the outlet of water. Said portion 13 has an inlet surface 16 facing the bladed assembly 5 through which the water flow C leaves the spiral path 20 and an outlet surface 17 matching the inlet of the divergent section 9.

Preferably, the inlet fitting 3 and the outlet fitting 4 are identical.

For a device having an internal diameter ranging from around 25.4 mm (1") to 50.8 mm (2"), the length of the device is preferably in the range 290 mm to 470 mm.

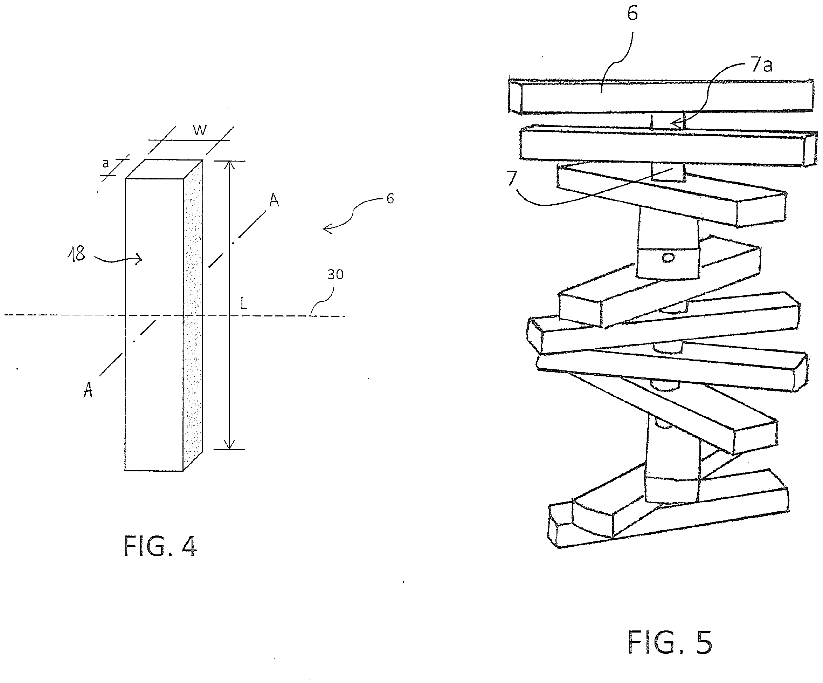

Fig. 5 shows a device, wherein the blades 6 are spaced one relative to the other and portions 7a of the supporting tube 7 between adjacent blades are contacted by the water flow. In the example of the figure, the blades are 11.

The water disinfection device 1 works as follows. Water is admitted through the inlet opening 8, passes through the convergent portion 9 where it is accelerated and depressurized, and is introduced into the channel 20 through the subsequent portion 10.

Water follows the direction indicated by arrow C in Fig. 1 and flows along the tortuous passage in the channel 20 impacting against the surfaces 18 of the blades 6, which induce a swirling motion.

The waterflow C leaving said tortuous passage is then introduced into the portion 13 of the outlet fitting 4 and passes through the divergent section 14 where it is pressurized.

The applicant has found that when the device 1 is fed with water at appropriate flow rate and pressure, the outlet flow exhibits ultrasonic pressure waves generated during the passage through the bladed assembly 5. For example, a frequency of 20.48 kHz has been detected at the outlet of a 2" device according to the invention. Said measurement has been carried out by means of the frequency meter "Patterson Ultrasound detector D 200".

These waves are believed to be responsible of the above described effects, such as bacteria inhibition and reduced regrowth of microorganisms.

As previously mentioned, a carrier frequency Fc is defined as the frequency of impacts of the flow water against the sequence of blades 6 (hits/time), from inlet to outlet. Accordingly, given that n is the number of the blades 6, *v* is the speed of water C, and *len* is the length of the passage 20, from end to end of the bladed assembly 5, the carrier frequency Fc is:

$$Fc = \frac{n\,v}{len} \qquad (1)$$

The length of the chamber *len* can be expressed as (*n·a*) wherein a is the thickness of the blades 6 and assuming there is substantially no clearance between adjoining blades 6, as in Fig. 1.

Consequently, the carrier frequency is given by the more simple formula:

$$Fc = \frac{v}{a} \qquad (2)$$

This relation can be used when designing the device, given that **Fc** is chosen in the preferred range of 100 to 200 Hz.

Example

A water treatment device according to Fig. 1 has a nominal diameter of 2" (two inches - 50.80 mm) and comprises a channel 20 with a set of blades 6 in the form of rectangular bars made of AISI 304 stainless steel. One of the blades is illustrated in Fig. 4.

A carrier frequency Fc = 160 Hz is selected. Based on Tables (1) and (2) above, a fundamental frequency $f_0$= 160 / 8.93 = 17.92 Hz is selected.

The following relation exists between the fundamental frequency $f_0$ and the features of the rectangular blade:

$$f_0 = 3.561\ R/L^2\ \sqrt{(Y/\rho)} \qquad (3)$$

wherein: R is the radius of gyration around a central axis 30 of transverse vibration (Fig. 4); L is the length of the blade; Y is the Young's modulus and p is the density. As the material is stainless steel, p = 7.87 $kg/dm^3$ and Y = 196.000 $N/mm^2$. It is assumed L = 53.8 mm.

In addition, the following relation exists between the thickness a of the blades and the above mentioned radius of gyration R:

The thickness a can be calculated using the above equations (3) and (4). The radius R is calculated from (3) by applying the condition of $f_0$ = 17.92 Hz, and then a is calculated from (4). In this example, one obtains a = 10.1 mm.

Accordingly, a blade thickness of 10 mm is selected.

The speed of water v can be calculated by using equation (2) which, in this example, leads to a speed of 1.61 m/s.

The width W of the blade (Fig. 4) can be calculated with numerical methods, assuming a preferred volumetric flow rate. The volumetric flow rate can be determined taking into account the need to avoid too large pressure drops. For example, in a 2" device the volumetric flow rate is preferably in the range 10 to 20 $m^3$/h. Assuming that the flowrate is 10 $m^3$/h, a width of 10 mm can be calculated.

The minimum activation water speed $v_{min}$ and flowrate can also be calculated.

The activation speed is the minimum speed to establish the ultrasonic pressure waves, according to the invention. Said minimum speed can be calculated from equation (2), replacing $F_c$ with $f_0$. Hence, in the present example, the minimum speed is:

$$v_{min} = f_0\, a = 0.181\frac{m}{s}$$

Said minimum speed corresponds, in the present example, to a minimum flowrate of about 19 liters/min.

The number of blades depends on the pitch angle between the blades and the overall deviation imposed to the water flow. Preferably at least two full rotations (i.e. 720 degrees) are imposed to the water flow, in order to achieve the desired ultrasonic frequency. The pitch angle is preferably in the range 10° to 45° (degrees). Then, by choosing a pitch angle of 30 degrees, the number of the blades n is 720 / 30 = 24.

The length of the device is calculated as a consequence. As the thickness of blades is 10 mm, the device is at least 240 mm long.

Experimental data

A first test was carried out on water samples containing a concentration of bacteria of 100.000 CFU/mL (colony-forming unit per milliliter) at 22 °C and 51.200 CFU/mL at 36 °C. Said samples of water were transferred from a first container to a second container by means of a pump ensuring a flow rate of 10 mL/min and a pressure of 5 bar and by interposing the device according to the invention in the transfer line. Water analysis were performed immediately after the passage through said device (t=0). The applicant observed that:

After the first passage of the water through the device, the bacteria load decreased significantly from 100.000 CFU/mL to 16.200 CFU/mL by carrying out the test at 22 °C (84% of efficiency) and from 51.200 CFU/mL to 4.200 CFU/mL by carrying out the test at 36 °C (92% of efficiency);

after the second passage of the water through the device, the bacteria load further decreased from 16.200 CFU/mL to 1.770 CFU/mL by carrying out the test at 22 °C (98% of efficiency) and from 4.200 CFU/mL to 1.740 CFU/mL by carrying out the test at 36 °C (97% of efficiency).

A second test was carried out on a water sample containing a concentration of bacteria of 3.600 CFU/mL at 36 °C. Water analysis were performed immediately after the passage through the device (t=0), and repeated after 3 days (t=3), 6days (t=6) and 10 days (t=10).

The results are summarized in Table (3) below.

Table (3)

| | Conc [CFU/mL] t=0 | Conc [CFU/mL] t=3 | Conc [CFU/mL] t=6 | Conc [CFU/mL] t=10 |
|---|---|---|---|---|
| Initial water | 3.600 | 4.000 | 32.000 | 44.000 |
| 1 passage | 20 | 30 | 510 | 8.700 |
| 2 passages | 10 | 12 | 200 | 1.400 |
| 3 passages | 6 | - | - | - |
| 4 passages | 4 | - | - | - |

**Claims**

1. Method for disinfecting water, wherein ultrasonic pressure waves are induced into a flow of water, wherein the method is carried out in a disinfection device (1) comprising a substantially tubular channel (20), wherein said ultrasonic waves are induced by impact surfaces (18) of pressure waves inducing blades (6) arranged in the tubular channel (20) and aligned along the direction of the flow of water, each of said surfaces (18) partially obstructing the passage of said flow of water, the pressure waves have a carrier frequency Fc which is equal to v / p wherein v is the speed of water and p is a constant pitch distance between the said impact surfaces (18), said carrier frequency is about 160 Hz, said pressure waves inducing blades (6) are shaped as rods or bars, preferably rectangular bars, and have a fundamental frequency of vibration or a frequency of a higher mode of vibration equal to said carrier frequency,

wherein the blades (6) are aligned in an axial direction of the tubular channel (20) and a front surface of each blade (6), facing the incoming flow of water, provides the respective impact surface (18) for the flow of water,

wherein the frequency $f_n$ of a selected mode of transversal vibration of said blades (6) is equal to said carrier frequency Fc, and said selected mode of vibration being the first mode or a higher n-th mode according to the inner diameter of said tubular passage (20), and according to the following table:

| n | Inner diameter (mm) |
|---|---|
| 1 | up to 15.8 |
| 2 | 15.9 - 26.6 |
| 3 | 26.7 - 40.9 |
| 4 | 41 - 62.7 |
| 5 | 62.8 - 95.3 |
| 6 | > 95.3 |

2. Method according to claim 1, wherein said ultrasonic waves have a frequency ranging from 20 to 100 kHz.

3. Method according to claim 2, wherein said ultrasonic waves have a frequency ranging from 20 to 40 kHz.

4. Method according to claim 1, wherein the impact surfaces (18) define a tortuous passage for the flow of water.

5. Method according to any of the previous claims, the disinfection device (1) comprising a shell (2) acting as a wave guide.

**Patentansprüche**

1. Verfahren zur Desinfektion von Wasser, wobei Ultraschalldruckwellen in einen Wasserfluss induziert werden, wobei das Verfahren in einer Desinfektionsvorrichtung (1) durchgeführt wird, die einen im wesentlichen röhrenförmigen Kanal (20) umfasst,

wobei die Ultraschallwellen durch Aufprallflächen (18) von Druckwellen-induzierenden Schaufeln (6) induziert werden, welche in dem röhrenförmigen Kanal (20) angeordnet und entlang Richtung des Wasserflusses ausgerichtet sind, jede der Oberflächen teilweise den Durchgang des Wasserstroms behindern, die Druckwellen eine Trägerfrequenz Fc, die gleich v / p ist, besitzen,

wobei v die Geschwindigkeit des Wassers ist und p ein konstanter Teilungsabstand zwischen den Aufprallflächen (18) ist, die Trägerfrequenz etwa 160 Hz beträgt, die Druckwellen-induzierenden Schaufeln (6) als Stäbe oder Stangen geformt sind, vorzugsweise rechteckige Stäbe, und

eine Grundschwingungsfrequenz oder eine Frequenz eines höheren Schwingungsmodus, gleich der Trägerfrequenz haben,

wobei die Schaufeln (6) in einer axialen Richtung des röhrenförmigen Kanals (20) ausgerichtet sind und die Frontfläche von jeder Schaufel (6), die dem einströmenden Wasserstrom zugewandt ist, eine jeweilige Aufprallfläche (18) für den Wasserstrom bietet,

wobei die Frequenz fn eines ausgewählter Modus der transversalen Schwingung der Schaufeln (6) gleich der Trägerfrequenz Fc ist, und der ausgewählte Schwingungsmodus der erste Modus oder ein höherer n-ter Modus gemäß dem Innendurchmesser des rohrförmigen Durchgangs (20) und gemäß der folgenden Tabelle ist:

| n | Innerer Durchmesser (mm) |
|---|---|
| 1 | bis zu 15,8 |
| 2 | 15,9 - 26,6 |

(fortgesetzt)

| n | Innerer Durchmesser (mm) |
|---|---|
| 3 | 26,7 - 40,9 |
| 4 | 41 - 62,7 |
| 5 | 62,8 - 95,3 |
| 6 | > 95,3 |

**2.** Verfahren nach Anspruch 1, wobei die Ultraschallwellen eine Frequenz im Bereich von 20 bis 100 kHz aufweisen.

**3.** Verfahren nach Anspruch 2, wobei die Ultraschallwellen eine Frequenz im Bereich von 20 bis 40 kHz aufweisen.

**4.** Verfahren nach Anspruch 1, wobei die Aufprallflächen (18) einen gewundenen Durchgang für den Wasserfluss definieren.

**5.** Verfahren nach einem der vorhergehenden Ansprüche, wobei die Desinfektionsvorrichtung (1) eine Hülle (2) umfasst, die als Wellenleiter wirkt.

**Revendications**

**1.** Procédé de désinfection de l'eau, dans lequel des ondes de pression ultrasoniques sont induites dans un courant d'eau,
où le procédé est mis en œuvre dans un dispositif de désinfection (1) comprenant un canal essentiellement tubulaire (20),
où les dites ondes ultrasoniques sont induites par des surfaces d'impact (18) de lames induisant des ondes de pression (6) disposées dans le canal tubulaire (20) et alignées selon la direction du courant d'eau, chacune des dites surfaces (18) obstruant partiellement le passage du dit courant d'eau, les ondes de pression ayant une fréquence porteuse Fc qui est égale à v/p où v est la vitesse de l'eau et p est une distance de pas constante entre les dites surfaces d'impact (18), la dite fréquence porteuse étant aux alentours de 160Hz, les dites lames induisant des ondes de pression (6) sont en forme de tiges ou de barres, de préférence des barres rectangulaires et ont une fréquence fondamentale de vibration ou une fréquence d'un mode supérieur de vibration égale à la dite fréquence porteuse, dans lequel les lames (6) sont alignées selon une direction axiale du canal tubulaire (20) et une surface frontale de chacune des lames (6) faisant face au courant d'eau arrivant fournit la surface d'impact respective (18) pour le courant d'eau,
où la fréquence $f_n$ d'un mode choisi de vibration transversale des dites lames (6) est égal à la dite fréquence porteuse Fc, et le dit mode choisi de vibration étant le premier mode d'un nième mode supérieur selon le diamètre interne du dit passage tubulaire (20), et selon le tableau suivant :

| n | Diamètre interne (mm) |
|---|---|
| 1 | Jusqu'à 15,8 |
| 2 | 15,9-26,6 |
| 3 | 26,7-40,9 |
| 4 | 41-62, 7 |
| 5 | 62,8-95,3 |
| 6 | >95,3 |

**2.** Procédé selon la revendication 1, **caractérisé en ce que** lesdites ondes ultrasoniques présentent une fréquence comprise entre 20 et 100kHz.

**3.** Procédé selon la revendication 2, **caractérisé en ce que** lesdites ondes ultrasoniques présentent une fréquence comprise entre 20 et 40 kHz.

4. Procédé selon la revendication 1, **caractérisé en ce que** les surfaces d'impact (18) définissent un passage tortueux pour le courant d'eau.

5. Procédé selon l'une quelconque des revendications précédentes, le dispositif de désinfection (1) comprenant une caqu (2) agissant comme un guide des ondes.

FIG. 1

FIG. 3

FIG. 2

FIG. 4

FIG. 5

EP 3 208 242 B1

**REFERENCES CITED IN THE DESCRIPTION**

**Patent documents cited in the description**

- US 2005058579 A
- WO 2012003815 A
- US 20100072143 A